# EUROPEAN PATENT APPLICATION

(11) **EP 0 688 091 A1**
(43) Date of publication of application: **20.12.1995**
(21) Application number: 95630040.4
(22) Date of filing: 04.05.1995
(51) Int. Cl.: H02K 29/08

(54) **High efficiency power supply and control for brushless permanent magnet motor**

(30) Priority: 04.05.1994 US 237782
(71) Applicant: EMERSON ELECTRIC CO., St. Louis Missouri 63136 (US)
(72) Inventor: Hoemann, Keith Ivo, Fenton, Missouri 63026 (US); Crapo, Alan Dean, Florissant, Missouri 63034 (US)
(74) Representative: Waxweiler, Jean

(57) **Abstract**

A simplified motor control for a brushless permanent magnet motor enables a relatively low voltage, high efficiency motor to operate from a high voltage source. A capacitor is connected to the input side of the power supply portion of the motor control. The capacitor acts as a lossless impedance and permits low voltage operation for the motor control. In the preferred embodiment, the motor is connected to an H bridge controller output stage. Rotor position is sensed by at least one Hall effect device. The Hall effect device output is used to gate conduction of control transistors, depending upon rotor position. The control transistors, in turn, control base drive to pairs of transistors of the H bridge output stage. Preferably, the motor control input is a full wave bridge rectifier connected to an output capacitor. The output capacitor provides dc bus voltage to the motor control. Additional control devices may be employed on the input side of the rectifier to vary the voltage on the output side of the rectifier. The design gives a very low cost motor and motor control combination, the combination having high reliability in applicational use.

## Description

### Background of the invention

This invention relates to dynamoelectric machines in the form of electric motors. While the invention is described in particularity with respect to brushless permanent magnet motors (BPM) those skilled in the art will recognize the wider applicability of the inventive principles disclosed hereinafter.

There has been, and continues to be, a movement toward high operating efficiency devices in electrical designs. That movement includes a move by appliance manufacturers to provide high efficiency consumer appliances for general use. Certain improvements in appliance efficiency are more obvious than others. For example, the ubiquitous household refrigerator has at least three electric motors associated with it. They include a hermetic compressor motor which drives the compressor for the refrigerant system, an evaporator motor, and, in many refrigerators, a condenser motor.

The general operation of the refrigeration system for the conventional refrigerator is well known. The compressor moves the refrigerant from the evaporator into the condenser. It then forces the refrigerant back to the evaporator through an expansion valve. Refrigerant vapor leaves a compressor at high pressure. As it flows into the condenser, the high pressure causes the vapor to condense back to liquid refrigerant. As this happens, the vapor gives out heat, making the condenser warm. The condenser is at the back of the refrigerator, and heat flows into the air around the refrigerator, often with the aid of the aforementioned condenser fan. The refrigerant leaves the expansion valve at low pressure, causing it to evaporate inside the pipe and get cold. The evaporator is inside the refrigerator and heat flows into the evaporator, making the refrigerator cold. Again, a fan is used to force air over the evaporator and distribute the cool air throughout the refrigerator interior.

Refrigerators operate day and night and because of their operational sequence, they are relatively costly to operate, even when attempts are made to increase their efficiency. Recently, there has been an industry-wide effort by refrigerator OEMs (original equipment manufacturers) to raise the level of refrigerator efficiency.

As will be appreciated by those skilled in the art, brushless permanent magnet motors in operational use offer the best efficiency presently known for electric motors in general use, although switched reluctance motors (SRM) and controlled induction motors (CIM) often are configured to achieve substantially equivalent performance. In the size of the motor of this invention, the brushless permanent magnet motor was found to offer the best engineering solution. A brushless permanent magnet motor is similar to other motor types in that it includes a stator assembly having a core of laminations formed from suitable magnetic material. The core has winding receiving slots formed in it. The rotor assembly commonly is the component that distinguishes a permanent magnet motor from other motors. Unlike other conventional motor structures, a BPM rotor has at least one permanent magnet associated with it. The motor may be either of a conventional design, in which the stator assembly has an axial opening through the core for reception of the rotor assembly, or the motor can be a so called inside out motor, which has the rotor assembly outboard of the stator.

While brushless permanent magnet motors offer higher efficiencies, they require an electronic circuit for applying electrical energy to the motor windings for proper operation of the motor. The control circuits required for motor operation often make application of the permanent magnet motor economically unjustifiable.

Condenser and evaporator fans in refrigerators conventionally are small and low cost designs. The low cost design of these motors commonly equates with a relatively low efficiency design. We have determined that the lower efficiency evaporator or condenser motors can be replaced with more efficient permanent magnet motors when low cost, rugged control circuits are employed for and in the motor design and the motor constructions are accomplished in accordance with the various disclosures incorporated by reference.

One of the objects of this invention is to provide an economically produceable permanent magnet motor adapted for use in refrigeration systems, and in particular, condenser motors for household refrigeration.

Another object of this invention is to provide a motor design which can be incorporated into a variety of applications.

Another object of this invention is to provide a motor construction which has a low cost control circuit for motor operation.

Another object of this invention is to provide a relatively low voltage brushless permanent magnet motor which is operable from a relatively higher voltage source.

Another object of this invention is to provide a control in which operational speed of the motor is adjustable by a simple device.

Another object of this invention is to provide power factor correction with a motor control circuit.

Other objects of this invention will be apparent to those skilled in the art in light of the following description and accompanying drawings.

### Summary of the Invention

In accordance with this invention, generally stated, a dynamoelectric machine includes a rotor assembly and a stator assembly. A control system is provided for controlling the energization of the motor. In the preferred embodiment, the motor is a brushless permanent magnet dc motor. The stator assembly has a plurality of winding coils associated with it. A simple yet reliable motor control is provided for energization of the winding coils in a preselected manner. The control includes a rectifier for providing a dc voltage from an ac source. A capacitor is used as a lossless impedance limiter on the input side of the rectifier. The control side of the rectifier is configured as a dc bus. The bus feeds a plurality of electronic switches arranged in an H bridge configuration for driving the brushless permanent magnet motor. The motor and controls are protected at locked rotor by the current limiting action of the capacitor.

In general, in a method form of the invention, a plurality of capacitors are operatively arranged on the input side to the rectifier. The capacitors are selectively connected on the input side so as to vary the voltage on the output side of the rectifier, the voltage variation permitting the motor control to provide multiple speeds for the motor.

In another form of the invention, the rectifier feeds a split bus, the bus being used to provide power to the motor control.

### Brief Description of the Drawings

In the drawings,
FIG. 1 is a bottom view, in perspective, of one illustrative embodiment of dynamoelectric machine of this invention.
FIG. 2 is a side view thereof;
FIG. 3 is a sectional view taken along the 3-3 of FIG. 2;
FIG. 4 is an enlarged, sectional view rotated ninety degrees with respect to FIG. 3, showing a partial construction of a rotor assembly for the motor of FIG. 1;
FIG. 5 is an exploded view of the motor shown in FIG. 1;
FIG. 6 is a view inside elevation of a stator assembly for the motor shown in FIG. 1;
FIG. 7 is an end view taken along the line 7-7 of FIG. 6;
FIG. 8 is an end view taken along the line 8-8 of FIG. 6; and
FIG. 9 is a diagrammatic view of the winding employed in conjunction with the motor of FIG. 1.
FIG. 10 is a schematic diagram for the control system employed in conjunction with the motor shown in FIG. 1;
FIG. 11 is a schematic view showing a split bus arrangement for the circuit of FIG. 10;
FIG. 12 is a schematic view illustrating an arrangement for providing multiple speeds for the motor shown in FIG. 1; and
FIG. 13 is a diagrammatic view illustrating the interconnection of the speed control circuit shown in FIG. 12 as employed in conjunction with a generically applied motor of the present invention.

### Description of the Preferred Embodiment

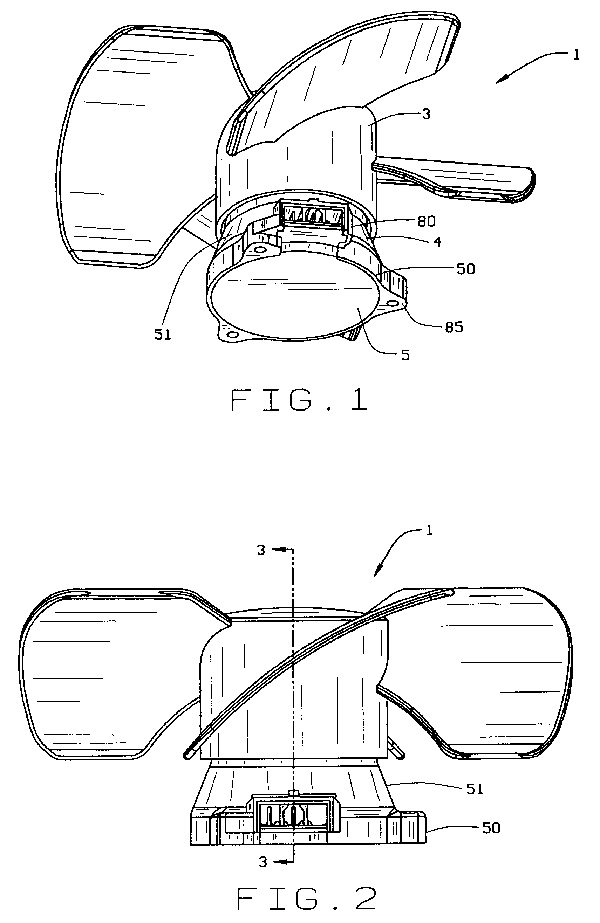

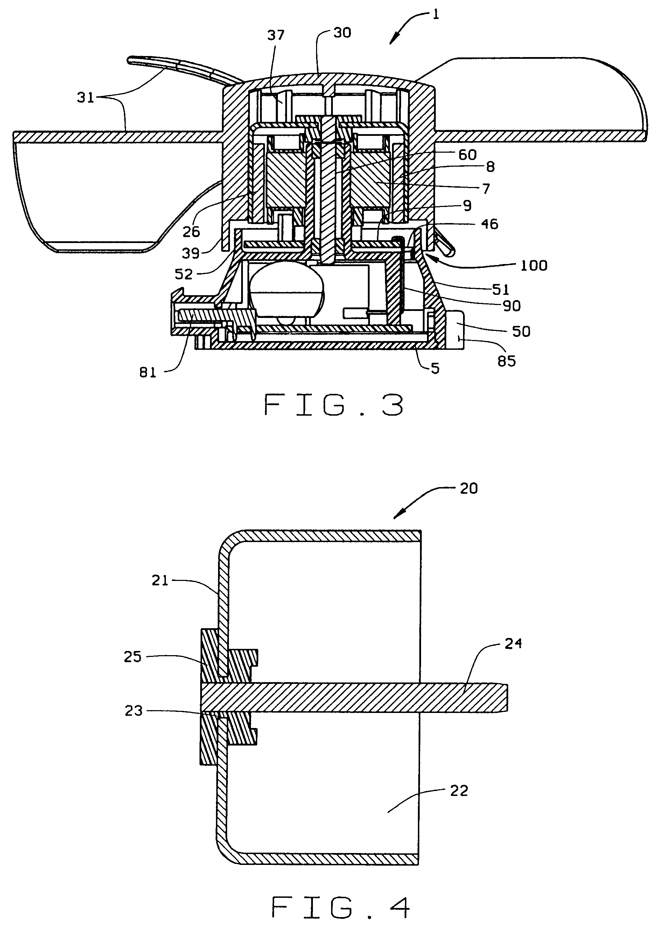

Referring now to FIG. 1, reference numeral 1 indicates one illustrative embodiment of motor assembly of this invention. The motor 1 includes an integral fan blade assembly 3, an enclosure 4, and a cover 5. Motor assembly 1 also includes a stator assembly 7, a rotor assembly 8, a motor connection assembly 9, and a motor control assembly 13, the component parts of which are best observed in FIGURES 3 through 8 and 10 through 13.

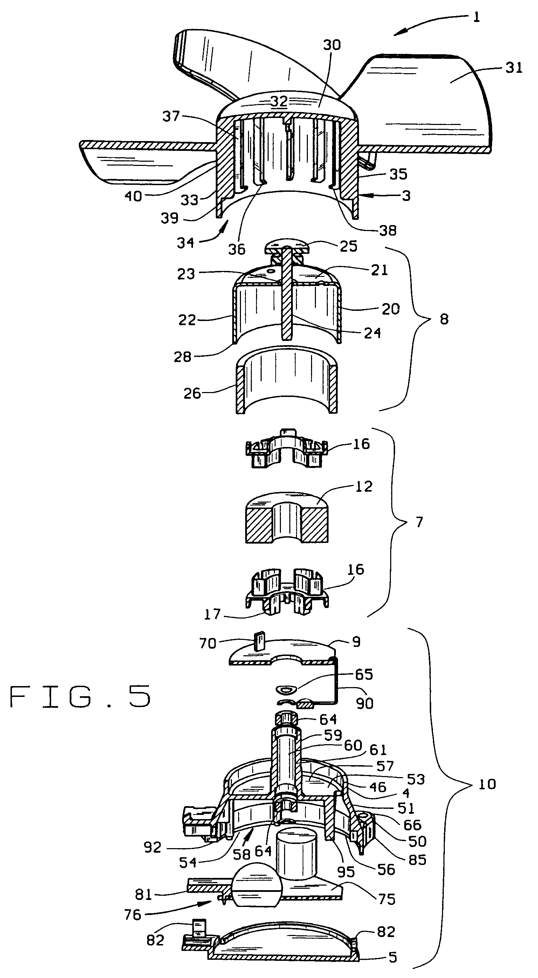

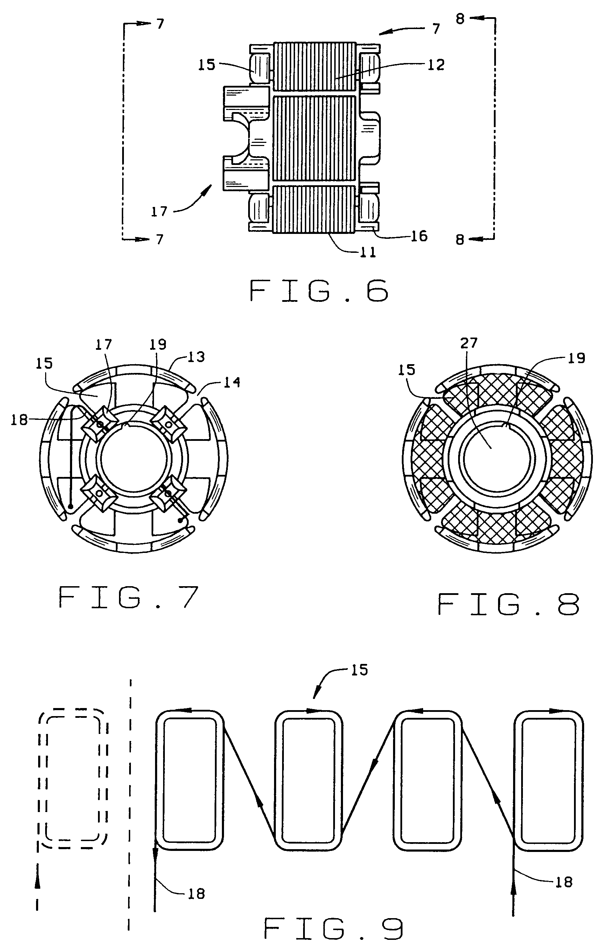

As shown in FIG. 6, the stator assembly 7 includes a core 12 constructed from a plurality of individual laminations 11 formed from suitable magnetic material. For ease of illustration, the core 12 is illustrated in solid form in FIG. 5. Those skilled in art will recognize that the core assembly may have a plurality of shapes or forms in other embodiments of the invention. The core 12, as indicated, is formed from a plurality of individual laminations 11. The laminations 11 are constructed by any conventional method. For example, the laminations 11 may be punched individually and assembled in the core, or the laminations may be constructed in a continuous strip as described, for example, in U.S. Pat. 4,613,780, a manufacturing process long used for alternator cores. In any event, the laminations have a location notch 19 formed in them, and define a central opening 27 in their core 12 assembled relationship.

The laminations 11 define a plurality of physical poles 13, each of which are separated by a winding receiving slot 14. A winding 15 is positioned or wound over the individual poles 13 in a conventional manner. Prior to such placement, however, molded core insulation 16 is placed on the core 12. Insulation 16 may be constructed in any convenient way. For example, the insulation may be formed by molding it in situ on the core, so that the winding 15 may be placed in insulative relationship to the core 12. In the embodiment illustrated, the insulation 16 is formed separately and merely inserted into the core in a friction fit. The stator assembly 7 of the present invention is unique in that suitable winding termination means 17 is formed on at least one of the respective ends of the insulation 16 for purposes generally described hereinafter, and specifically described in copending application, Ser. No. 240633/08, filed May 11, 1994.

It is here noted that at least one of the ends 18 of a particular phase of the winding 15 is engaged in and by the termination means 17. The winding 15 is shown in cross hatch in FIG. 8 merely for illustrative purposes.

Rotor assembly 8 includes a cup 20 having a top wall 21 and an annular side wall 22. The top 21 has a central opening 23 formed in it, sized to receive a shaft 24. Shaft 24 is attached to cup 20 by any convenient method. In the preferred embodiment, the shaft 24 is attached permanently to the cup 20 along the top 21 by casting a suitable material about the shaft and cup 20, as illustrated at 25. Casting is accomplished in a mold, not shown, which holds the proper relationship between the shaft and the cup until the material 25 sets and thereafter maintains the relationship. Preferably, the material is zinc, although other materials may be employed, if desired.

At least one permanent magnet 26 is formed to fit along the side wall 22 of the cup 20. Magnet 26 is attached to side wall 22 by any convenient method. Suitable epoxy adhesives work well, for example. The number, placement, and arcuate design of magnet 26 depend in large measure on the electrical property design requirements that the motor assembly 1 is intended to accomplish.

Fan blade assembly 3 includes a central hub 30 having a plurality of fan blades 31 extending outwardly from it. Preferably, the blades 31 are integrally formed with hub 30. Hub 30 includes a top 32 and a side wall 33 which, together, define a chamber 34. Side wall 33 has an exterior surface 35 and an interior surface 36, separated by a material thickness 40 of the side wall. Material thickness 40 may vary in other embodiments of the invention in order to provide suitable construction characteristics as may be required for blade assembly 3 applicational use. A plurality of spacers 37 are formed along the surface 36 of the side wall 33. Spacers 37 mate with the side wall 22 of cup 20 and position the cup and the blade assembly 3 with respect to one another. Preferably, the spacers 37 include radially inwardly directed projections 38. The projections 38 are designed to engage a lower edge 28 of the cup 20 during the assembly process described hereinafter. As will be appreciated by those skilled in the art, spacers 37 may vary or be eliminated, in other embodiments of the invention, so as to vary the diameter of the chamber 34, permitting that chamber to accept various sizes of the cup 20. That ease in variation enables the motor designer to utilize the same forming molds for the blade assembly 3 in a variety of motor sizes and applications, without requiring additional tooling in each instance. As will be appreciated, the projections 38 may extend from the surface 36, if desired.

Because fan assembly 3 is a molded part, it also is relatively easy to vary the design of the blades 31, again to fit the application requirement. This is an important feature of the present invention in that a designer can alter blade pitch and blade silhouette easily without requiring completely new molds for fan blade construction.

The side wall 33 has a lip 39 formed in it along the material thickness 40 of the side wall. The lip 39 forms a portion of a labyrinth seal system 100, described hereinafter.

Enclosure 4 includes a base member 50 having a side wall 51 extending radially outward from it. The side wall 51 defines a cylindrical upper portion 52. The portion 52 extends upwardly from a plate 53. Plate 53 is formed integrally with enclosure 4 in the embodiment illustrated. Enclosure 4 has an upper end 55 and a lower end 56, upper and lower ends being referenced to FIG. 5. The enclosure 4 delimits a generally cylindrical volume 54 between the ends 55 and 56. The plate 53 divides the volume 54 into a first chamber 57 and a second chamber 58. Plate 53 has a hub 59 extending upwardly from it. The hub 59 has an axial opening 60 through it, the opening 60 being defined by an interior wall 61 of the hub 59. Wall 61 defines a pair of lips 62 and 63 respectively formed on opposite ends of the hub 59. The lips 62, 63 are sized for receiving one each of a pair of bearings 64. A lock washer 65 and a lock washer 66 are positioned on shaft 24 to locate and hold the shaft 24 location with respect to the bearings 64 in a conventional manner, in the assembled relationship of the parts.

Chamber 57 is sized to receive motor board or motor connection assembly 9. Motor board 9 is a circuit board, at least one surface of which has a plurality of electrical connections and components associated with it. These components are illustratively indicated by the reference numeral 70 in FIG. 5 and are described in detail hereinafter. The motor board 9 has a central opening 65 formed in it, permitting the board to be dropped over the hub 59 to position the board 9 in the chamber 57. Plate 53 also has an opening 46 formed in it, which permits communication between the chamber 57 and the chamber 58.

Chamber 58 is sized to receive the motor control assembly 10. The control assembly 10 includes a circuit board 75 having a plurality of components associated with it, generally indicated by the reference numeral 76.

As best shown in FIG. 1, the base 50 is formed to define a connector block 80. Connector block 80 is sized to receive a plurality of male electrical connectors 81. The connectors 81 are attached to the board 75 in a conventional manner, and define the input power connection for the motor assembly 1. The electrical connection 90 extends between the motor board 9 and the board 75 through the opening 46 in the plate 53. Again, various features of the connection are described in the copending applications incorporated herein by reference. It is here noted that a board 75 generally is a high voltage input board, and the board 9 is a low voltage board from which the stator assembly 7 is operated.

Base 50 also defines a plurality of mounting pads 85 by which the motor assembly 1 is attached to its intended application.

The cover 5 is sized to close the chamber 58. The cover 5 includes a plurality of mounting devices which are intended to be received in suitable receptacles 96 formed on the base 50 in a snap fit relationship. When so positioned, the cover 5 closes the chamber 58. While other closure constructions are compatible with the broader aspects of the invention, details of the preferred closure are contained in copending application Serial Number 240633/08.

As shown in FIG. 3, in the assembled relationship of the various parts shown exploded in FIG. 5, the lip 39 of the side wall 33 overlaps the portion 52 of the base 50. That overlap defines a movable labyrinth seal system 100 which keeps the chamber 56 and the remaining motor structural components free from any associated environmental contaminants the motor assembly 1 may encounter in applicational use.

As apparent from the above description, the motor 1 assembly is constructed entirely without the use of threaded fasteners or other similar mechanical types of fasteners. In addition, the construction of assembly 1 is substantially simplified and may be automated in a number of respects. The cup 20 shaft 24 combination is constructed, and the stator assembly 7 insulated and wound. As described in application Serial No. 240629/08 , and shown in FIG. 6, motor winding end turns 18 are associated with the winding termination 17 of the insulation system 16 employed with the stator assembly 7. That permits the stator assembly to be plugged into the board 9, thereby making the electrical connection between the windings 15 of the stator assembly 7 and the board 9 merely by that interconnection. Likewise, use of the connection 90 permits the board 75 to be interconnected to the connection 90 again, merely by the placement of the board 75 into the chamber 58. Toward that end, electrical interconnect 95 may be formed integrally with the plate 53 to position the connection 90 with respect to the board 75. The attachment of the male electrical connections 81 directly into the board 75 and their extension through block 80 again, is accomplished merely by component placement. The arrangement permits automation of motor assembly manufacture in a way not available with prior art motor constructions. Details of the interconnection, again, are contained in copending serial number 240629/08.

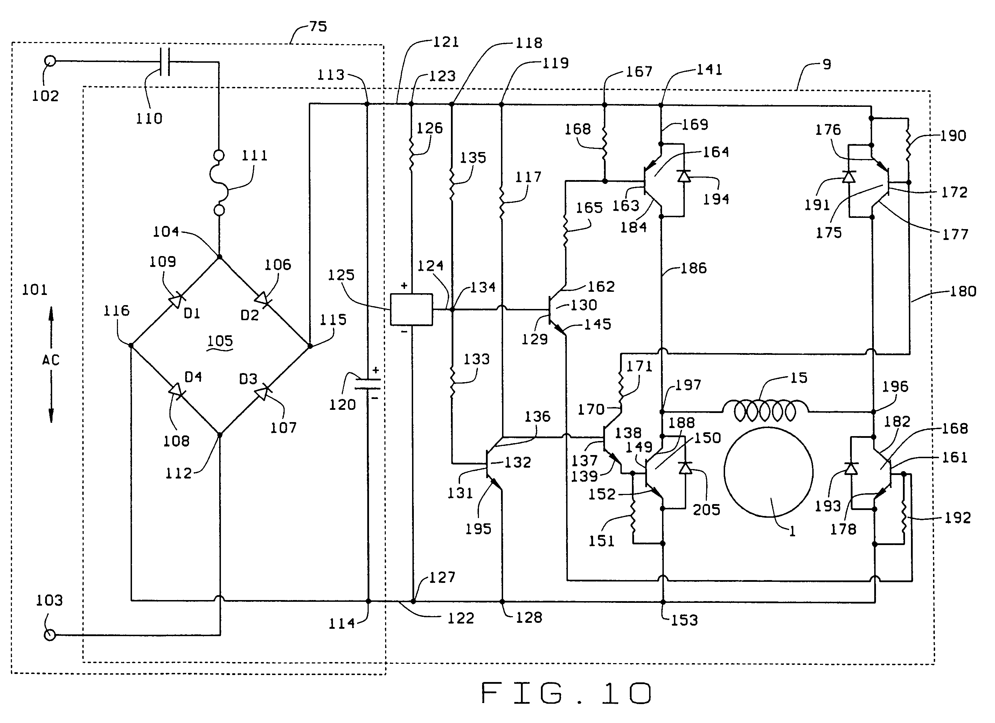

Referring now to FIG. 10, the motor control 10 of the present invention is illustrated in greater detail. As shown, a source of ac power 101 is connected between a terminal 102 and a terminal 103. The terminal 102 is connected to an input side 104 of a full wave bridge rectifier 105 through a capacitor 110. The terminal 103 is connected to an input side 112 of bridge 105. Capacitor 110 is important in operation of the control of this invention. First, the capacitor 110 acts as a lossless impedance to the motor control. Second, the capacitor helps reduce the input voltage substantially. This reduction in voltage enables the control of the invention to utilize very low cost components. In addition, the capacitor limits current flow to the control in all operational conditions of motor operations, permitting the control to employ a simplified control configuration.

The rectifier 105 is conventional and includes four diodes 106 through 109. A fuse 111 is connected between the capacitor 110 and the terminal 104 of the rectifier 105. Fuse 111 is a simple, low cost protection device which provides overcurrent control for the remainder of the circuit, in the event capacitor 110 should fail for any reason. The rectifier 105 has an output side 115 and an output side 116.

The output sides 115 and 116 of the rectifier 105 are connected to a capacitor 120 at connection points 113 and 114. Capacitor 120 provides dc bus voltage for a dc rail configuration made of an upper rail on line 121 and a lower rail on line 122. A Hall effect device 125 is connected to the Positive rail 121 at a connection point 123 through a resistor 126, and to the negative rail 122 at a connection point 127. The Hall effect device 125 has an output side 124 which is connected to a connection point 134. The connection point 134 is connected to the positive rail 121 at a connection 118 through a resistor 135. Connection point 134 also is connected to a base 131 of an NPN transistor 132 through a resistor 133 and to a base 129 of an NPN transistor 130.

A collector 136 of transistor 132 is connected to the rail 121 at a point 119 through a resistor 117. Collector 136 also is connected to the base 137 of an NPN transistor 138. An emitter 195 of transistor 132 is connected to the negative rail 122 at a point 128.

An emitter 139 of transistor 138 is connected to a base 149 of an NPN transistor 150. A resistor 151 also is connected between the base 149 and an emitter 152 of the transistor 150. Emitter 152 is connected to the negative rail 122 at a connection point 153.

A collector 170 of transistor 138 is connected to a resistor 171. Resistor 171 in turn is connected to a base 172 of a PNP transistor 175. An emitter 176 of transistor 175 is connected to the positive rail 121. A collector 177 of transistor 175 is connected along a line 180 to a collector 182 of an NPN transistor 160 at a connection point 196.

An emitter 145 of transistor 130 is connected to a base 161 of transistor 160. A collector 162 of transistor 130 is connected to a base 163 of a transistor 164 through a resistor 165. The resistor 165 and base 163 of transistor 164 is connected to the rail 121 at a connection point 167 via a resistor 168. An emitter 169 of transistor 164 also is connected to the rail 121 at a point 141.

A collector 184 of transistor 164 is connected, along a line 186 to the collector 188 of transistor 150 at a connection point 197. The motor winding 15 is electrically connected across the connection points 196, 197.

An emitter 178 of transistor 160 is connected to the negative rail 122.

A resistor 190 is connected between the base 172 and the emitter 176 of transistor 175. A diode 191 also is connected between the collector 177 and the emitter 176 of transistor 175.

A resistor 192 is connected between the base 161 and the emitter 178 of transistor 160. A diode 193 also is connected between the emitter 178 and the collector 182 of transistor 160. Likewise, a diode 194 is connected between the emitter 169 and the collector 184 of transistor 164, while a diode 205 is connected between the emitter 152 and the collector 188 of transistor 150. The base emitter resistors 168, 190, 151, and 192 stabilize their respective transistor's operation and improve turn-off the the transistors.

In operation, output signals from the Hall effect device 125 at node 134 biases the transistors 132 and 130 into conduction. The conduction by transistor 130 provides base drive to transistor 164 and base drive to transistor 160. Current flow then can proceed from the rail 121, through transistor 164, the line 186, through motor winding 15, and the transistor 160 to the negative rail 122. As the rotor of motor 1 rotates, the signal output from Hall effect 125 changes from a high to a low state. As that change occurs, transistor 132 acts as an inverter, and provides base drive to transistor 138. Conduction by transistor 138, in turn, turns on transistor 175 and transistor 150. Current then flows via transistor 175, line 180, winding 15 and transistor 150 to the negative rail 122. Concurrently, a low state at base 129 of transistor 130 causes transistor 130 to remove base drive from transistor 164, opening that current path through the winding 15. The cycle repeats as the rotor of motor 1 continues rotation.

As will be appreciated by those skilled in the art, the transistors employed in the control 10 are among the lowest cost electronic switches available on the market, and the circuit design is highly reliable and efficient in operational use. It is important to note that these low cost components can be used because of the voltage reduction provided by capacitor 110.

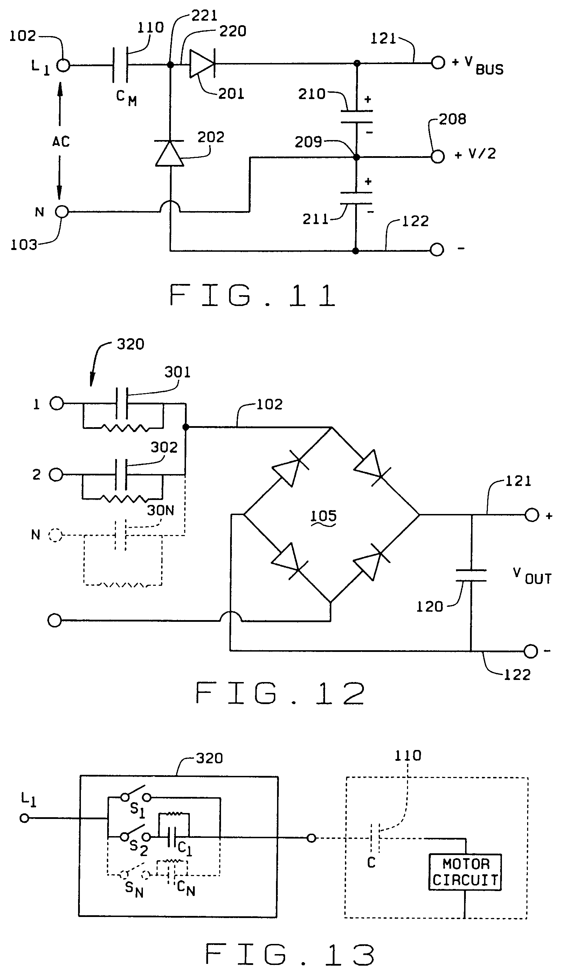

Referring to FIG. 11, a split bus input arrangement for the control 10 is illustrated. As there shown, input terminal 102 is connected to capacitor 110 and to the anode side 220 of a diode 201 at a connection point 221. The input 103 is connected directly to a node 209. A diode 202 has its cathode side connected to the anode of diode 201 at 221, the anode side of diode 202 being connected to the negative rail 122. The cathode side of diode 201 is connected to the positive rail 121. A capacitor 210 is connected between the rail 121 and the node 209, while a capacitor 211 is connected between the node 209 and the rail 122. As will be appreciated by those skilled in the art, this is a voltage doubler arrangement that has particular importance in this context of the present invention. The circuit of FIG. 11 eliminates the use of two diodes and the effect of their electrical loss on overall system efficiency. That is or can be important where the highest possible efficiency is required. In this embodiment, resistors 126, 135 and 137 are connected to a v/2 terminal 208, the remaining components being connected as described above. This reduces the power requirements for certain of the control circuit components, and further aids in improving system efficiency.

While the control 10 is exceedingly effective in operating the motor 1, it is not possible selectively to vary speed of the motor with the control shown in FIG. 10. However, a low cost multiple speed permanent magnet motor can be provided through use of the circuit shown in FIG. 12. As there shown, the input 102 of the rectifier 105 is connected to a bank of capacitors 301, 302, 30N, indicated generally by the reference numeral 320. By selectively connecting the capacitors 301-30N to the input 102 of the rectifier 105, the voltage available between the rails 121, 122 can be altered. That voltage variation, in turn, alters the speed at which the motor 1 operates. This is an important feature of the present invention, in that the motor 1 and control of this invention can be applied over a wide range of applications. The use of capacitors as described above in refrigeration applications is particularly appropriate. The motor control is highly capacitive, providing a leading power factor component. Compressors for refrigeration are highly inductive, providing a lagging power factor component. We have found that the use of our invention unexpectedly helps to correct power factor for the appliance, resulting in lower operating costs over what was expected by the use of the motor control and motor combination alone. FIG. 13 illustrates the use of the bank 302 for that purpose in diagrammatic form.

Numerous variations, within the scope of the dependent claims, will be apparent to those skilled in the art in light of the foregoing description and accompanying drawings. For example, the design silhouette of the motor assembly 1 may vary in other embodiments of this invention. In like manner, other mounting constructions for the assembly 1 may be employed. Certain materials used in the construction of various components were described as preferred. Those materials may be altered in other embodiments, if desired. While transistor switches are described because of their low cost, other switch types may be utilized, if desired. Likewise, the control components were described as configured on a pair of circuit boards. Those skilled in the art appreciate that a single board may be used in other embodiments of the invention. The fuse 111 may be eliminated in other embodiments of our invention. On the other hand, a MOV (metal oxide varistor) may be connected between the terminal 102, 103, for example, to protect the control of this invention in unusual electrical circumstances. The capacitor bank 320 may be employed in the circuit design shown in FIG. 11. Likewise, while the capacitor bank 320 is shown in FIG. 13, a single capacitor may be employed, if desired. These variations are merely illustrative.

## Claims

1. A dynamoelectric machine comprising:
a stator assembly including a core of magnetic material, and a plurality of windings carried by the core;
a rotor assembly including a shaft mounted for rotation with respect to said stator assembly;
a rectifier operatively connected between a source of ac power and said stator assembly, said rectifier having an input side and an output side;
a capacitor electrically connected in series with said rectifier on the input side of said rectifier, the output side of said rectifier providing first and second direct current rails; said capacitor limiting current flow on the output side of said rectifier;
at least one Hall effect device having first and second sides connected between said rails and an output side;
a first electrical switch connected to the output side of said Hall effect device;
a second electrical switch operatively connected to the output side of said Hall effect device;
a first pair of power switches electrically connected to said first electrical switch;
a second pair of power switches operatively electrically connected to said second electrical switch; and
said first and second pairs of said power switches being electrically connected to said winding so as to provide at least two current paths across said winding, said first and said second electrical switches rendering said current paths conductive in a predetermined order.

2. The dynamoelectric machine of claim 1 wherein all of said switches are transistors.

3. The dynamoelectric machine of claim 2 wherein said power switches are arranged in an H bridge configuration.

4. The dynamoelectric machine of claim 1 further including a plurality of capacitors operatively connected to the input side of said rectifier, said capacitors being selectively electrically connected to said rectifier to vary the voltage on the output side of said rectifier.

5. The dynamoelectric machine of claim 4 wherein said rectifier is a full wave bridge rectifier.

6. The dynamoelectric machine of claim 1 further including voltage doubler means electrically connected to said rectifier.

7. The dynamoelectric machine of claim 1 wherein said rotor assembly further includes at least one permanent magnet.

8. A method of operating a dc motor energized from an ac source through a rectifier having an output side providing a dc bus voltage comprising the steps of:
rectifying the output of the ac source at said rectifier;
controlling dc voltage on the output side of said rectifier by connecting a capacitor across the rectifier input;
attaching a motor across the dc bus, said motor having a stationary assembly including at least one winding, and a rotor assembly associated with the stationary assembly; the motor being responsive to a control circuit for controlling current flow through a plurality of current paths, each including at least one coil of the motor winding; and
activating a control circuit to operate the motor.

9. The method of claim 8 including connecting a plurality of capacitors to the input side of said rectifier; and
selecting among the capacitor plurality to vary the voltage on the output side of said rectifier.

10. The method of claim 9 wherein at least three capacitors are connected to said rectifier.

11. The method of claim 10 wherein said rectifier is a full wave bridge rectifier.

12. A circuit for controlling energization of a permanent magnet motor from an ac source, the motor including a stator assembly having a plurality of winding coils associated with it, said winding coils being adapted to be energized electrically in a preselected manner, and a rotor assembly associated with said stator assembly in selected magnetic coupling relative to said winding coils, comprising:
a pair of dc lines;
means for rectifying the ac output of an ac source to apply a dc voltage across said dc lines;
a capacitor connected in input side of said rectifier means for providing a voltage reduced with respect to said ac source across said dc lines;
means responsive to the angular position of the rotor for deriving commutation signals;
a plurality of current paths connected across said dc lines, each including electronic commutating means for connecting in series with at least one of the winding coils and responsive to the commutation signals to render the current paths conductive in a predetermined order; and
means for varying the voltage at the output side of said rectifier operatively connected to the input side of said rectifier.

13. The circuit of claim 12 when the rectifier is a full wave bridge rectifier.

14. A circuit for controlling energization of a permanent magnet motor from an ac source, the motor including a stator assembly having a plurality of winding coils associated with it, said winding coils being adapted to be energized electrically in a preselected manner, and a rotor assembly associated with said stator assembly in selected magnetic coupling relative to said winding coils, comprising:
a pair of input lines;
means for rectifying the ac output of an ac source connected to said pair of input lines to supply a dc voltage across said input lines;
a capacitor connected in series with said rectifying means for reducing the voltage on the output side of said rectifying means with respect to said ac source;
means responsive to the angular position of the rotor for deriving commutation signals;
a plurality of current paths connected across said input lines, each including at least one switch for connecting said input lines with at lease one of the winding coils, said switches being responsive to commutation signals to render the current paths conductive in a predetermined order; and
said capacitor limiting current flcw through said paths to a level sustainable by said switches.

15. The circuit of claim 14 wherein said switches are transistors.

16. The circuit of claim 15 wherein said rectifier is a full wave bridge rectifier.

17. The circuit of claim 15 wherein said rectifying means further includes voltage doubler means connected to said pair of input lines.

18. The circuit of claim 16 further including a capacitor bank operatively connected to the input side of said rectifier for varying the voltage of the output side of said rectifier.

19. The circuit of claim 17 further including a capacitor bank operatively connected to said voltage doubler means.

20. A circuit for controlling energization of a dynamoelectric machine from an ac source, the dynamoelectric machine including a stator assembly having a plurality of winding coils associated with it, said winding coils being adapted to be energized electrically in a preselected manner, and a rotor assembly associated with said stator assembly in selected magnetic coupling relative to said winding coils, comprising:
a pair of input lines;
means for rectifying the ac output of an ac source connected to said pair of input lines to supply a dc voltage across said input lines;
a capacitor connected in series with said rectifying means for reducing the voltage on the output side of said rectifying means with respect to said ac source;
means responsive to the angular position of the rotor for deriving commutation signals;
a plurality of current paths connected across said input lines, each including at least one switch for connecting said input line with at least one of the winding coils, said switches being responsive to commutation signals to render the current paths conductive in a predetermined order; and
said capacitor limiting current flow through said path to a level sustainable by said switches.

21. The circuit of claim 20 further including at least a second capacitor connected in series with said capacitor connected in series with said rectifying means, said second capacitor providing speed variation for said rotor.
